Europäisches Patentamt

European Patent Office

Office européen des brevets

(19)

(11) Veröffentlichungsnummer: **0 308 796 B1**

(12) ## EUROPÄISCHE PATENTSCHRIFT

(45) Veröffentlichungstag der Patentschrift:
21.08.91 Patentblatt 91/34

(51) Int. Cl.⁵: **B41J 27/00, G01F 23/00**

(21) Anmeldenummer: **88115024.7**

(22) Anmeldetag: **14.09.88**

(54) **Einrichtung zur Überwachung des Füllstandes eines Behälters für Schriebflüssigkeit bei Registriergeräten.**

(30) Priorität: **21.09.87 DE 8712728 U**

(43) Veröffentlichungstag der Anmeldung:
**29.03.89 Patentblatt 89/13**

(45) Bekanntmachung des Hinweises auf die
Patenterteilung:
**21.08.91 Patentblatt 91/34**

(84) Benannte Vertragsstaaten:
**AT BE CH DE FR GB IT LI NL**

(56) Entgegenhaltungen:
**EP-A- 0 047 478**
**DE-A- 3 529 805**
**DE-B- 2 639 697**
**DE-C- 3 131 944**

(73) Patentinhaber: **Siemens Aktiengesellschaft**
**Wittelsbacherplatz 2**
**W-8000 München 2 (DE)**

(72) Erfinder: **Franke, Rolf-Dieter**
**Gellertstrasse 38**
**W-7500 Karlsruhe 21 (DE)**
Erfinder: **Huth, Leif, Dipl.-Ing. (FH)**
**Klosterwaldstrasse 19**
**W-7506 Bad Herrenalb (DE)**

## Beschreibung

Die Erfindung bezieht sich auf eine Einrichtung zur Überwachung des Füllstandes eines Behälters für Schreibflüssigkeit, im folgenden kurz Tinte genannt, bei Registriergeräten gemäß Oberbegriff des Anspruchs 1.

Bei Tintenschreibeinrichtungen, insbesondere bei Registriergeräten oder Plottern, muß der Tintenvorrat im Tank überwacht und ein Minimalfüllstand gemeldet werden, da die Tintenförderung zum Schreibkopf des Gerätes sonst wegen angesaugter Luft ausfallen würde.

Es sind Einrichtungen bekannt, z.B. aus der DE-PS 3131944, bei welchen eine federbelastete Platte auf einen in einem Gehäuse angeordneten flexiblen Tintenbeutel drückt. Bei Erreichen eines unteren Grenzwertes einer den störungsfreien Betrieb der Schreibeinrichtung noch ermöglichenden Tintenmenge in dem Tintenbeutel wird über Kontakte ein Grenzwertmeldesignal ausgelöst. Mit dieser Einrichtung läßt sich jedoch lediglich das Erreichen der Tintenmindestmenge überwachen.

Es besteht die Aufgabe, eine Einrichtung der eingangs genannten Art so zu verbessern, daß der aktuelle Tintenstand jederzeit visuell überwacht werden kann und daß die manuelle Ausübung eines Drucks auf den an den Schreibkopf der Schreibeinrichtung angeschlossenen Tintenbeutel möglich ist, um eventuell auftretende Luftblasen in der Schreibdüse oder -kapillare zu entfernen.

Eine Lösung der Aufgabe läßt sich mit einer Einrichtung erreichen, die die Merkmale des Anspruchs 1 aufweist.

Die Tintenmenge in den leicht auswechselbaren Tintenbeuteln läßt sich an der vertikalen Stellung des freien Hebelendes grob abschätzen oder mittels einer in der Nähe des Hebelendes angebrachten vertikalen Gradeinteilung genauer überwachen.

Durch Antippen des freien Hebelendes von Hand läßt sich kurzzeitig ein Druck auf den Tintenbeutel ausüben, um eventuell vorhandene Luftblasen in der Schreibdüse oder -kapillare im Schreibkopf zu entfernen.

In einer bevorzugten Ausführungsform ist der oder sind die Behälter mit den Tintenbeuteln in einer Ausnehmung in der Gehäusewand des Schreib- oder Registriergeräts auswechselbar angeordnet und mit dem beweglichen Schreibkopf über flexible Leitungen verbunden. Die Ausnehmung kann mittels einer Tür oder Klappe aus durchsichtigem Werkstoff abgeschlossen werden, auf der die vertikale Graduierung zur Füllstandsüberwachung angebracht sein kann.

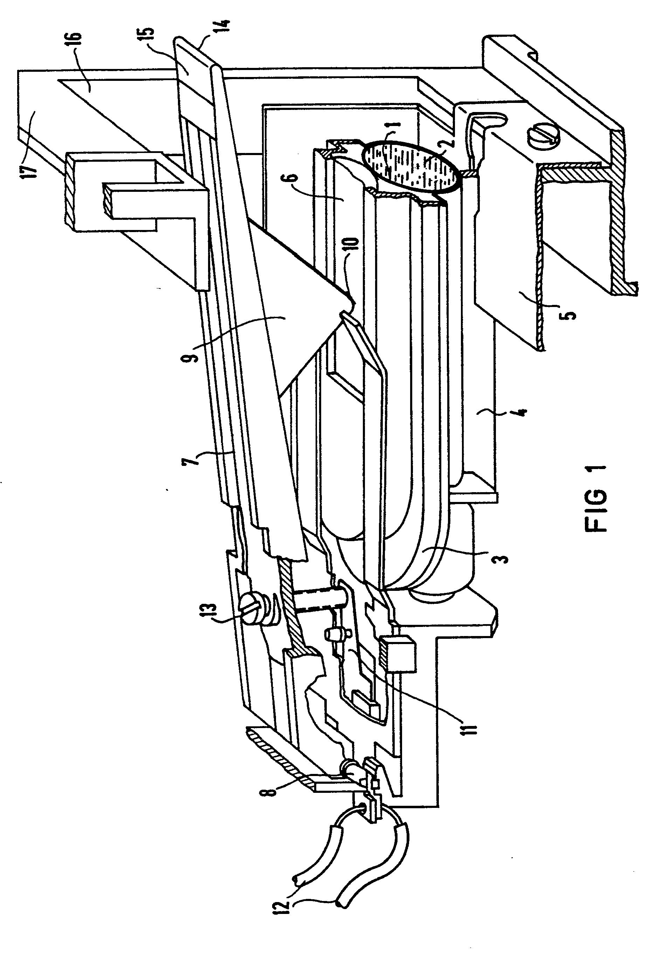

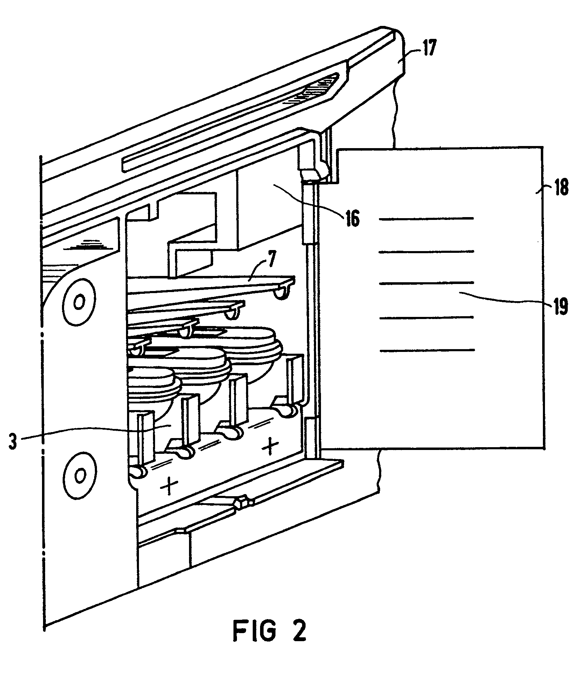

Zur Erläuterung der Erfindung sind in den Figuren 1 und 2 Ausführungsbeispiele gezeigt und im folgenden beschrieben.

Figur 1 : Ein länglicher Tintenbeutel 1 aus flexiblem Material mit einem Tintenvorrat 2 liegt in einem trogartigen Behälter 3, welcher mittels eines Fortsatzes 4 in eine Halterung 5 im oder am Gerät einschiebbar ist. Behälter und Tintenbeutel können auch miteinander verbunden als auswechselbare Einheit ausgebildet sein. In dem trogartigen Behälter 3 ist eine auf dem Tintenbeutel 1 aufliegende, im wesentlichen rechteckige Druckplatte 6 geführt, die in drei Freiheitsgraden beweglich ist. Über der Druckplatte 6 ist ein einarmiger Hebel 7 angeordnet, der mit einem Ende 8 drehbar gelagert ist und an seiner Unterseite einen prismenförmigen Fortsatz 9 aufweist, dessen Schneide 10 quer auf der Oberseite der Druckplatte 6 aufliegt. Die Breite der Schneide 10 wird so gewählt, daß ein Abkippen der Druckplatte 6 um ihre Längsachse nicht auftreten kann.

Der Hebel 7 ist in der Nähe seines gelagerten Endes 8 mit Mitteln zur Betätigung eines nicht gezeichneten Grenzwertmelders versehen, die hier aus einem Federkontaktpaar 11 mit den zum Grenzwertmelder führenden Leitungen 12 und einer auf eine der Kontaktfedern 11 wirkenden, im Hebel 7 geführten Einstellschraube 13 bestehen, mit welcher die Kontaktgabe bei einer der erforderlichen Tintenrestmenge im Tintenbeutel 1 entsprechenden Winkelstellung des Hebels 7 eingestellt werden kann.

Der Hebel 7 ragt mit seinem freien Ende 14 über die die vordere Begrenzung des Behälters 3 enthaltende senkrechte Ebene hinaus, so daß aus seiner Stellung der aktuelle Füllstand im Tintenbeutel 1 abgeschätzt werden kann.

Das freie Ende 14 des Hebels 7 zudem ist mit einer Fingerauflage 15 versehen, um durch Antippen einen Druckimpuls zu erzeugen, um so Luftblasen oder andere Verunreinigungen aus der Schreibdüse oder -kapillare des angeschlossenen Schreibkopfs zu entfernen.

Der einarmige Hebel 7 kann, wie bereits dargestellt, an seinem Ende 8 drehbar gelagert oder über ein federndes Zwischenglied auslenkbar sein, so daß der auf die Druckplatte 6 ständig ausgeübte Druck durch Schwerkraft und/oder Federkraft erzeugbar ist.

Die beschriebene Einrichtung ist durch eine Ausnehmung 16 in der Wand 17 eines Gerätegehäuses gut zugänglich angeordnet.

Figur 2 zeigt die Anordnung von vier Behältern 3 in einer Nische in einem Gerätegehäuse. Sie sind durch die bereits beschriebene Ausnehmung 16 in der Gerätegehäusewand 17 zugänglich.

Die Behälter 3 enthalten Tintenbeutel mit Tinten in vier verschiedenen Farben. An der von außen sichtbaren Stellung der Hebel 7 läßt sich der Füllstand in den Tintenbeuteln abschätzen.

Die Ausnehmung 16 kann aber auch mittels einer Tür 18 aus durchsichtigem Werkstoff abgeschlossen werden, auf der eine vertikale Gradeinteilung 19 angebracht ist. Damit läßt sich auch bei geschlossener Tür 18 mittels der als Zeiger wirkenden freien Enden 14 der Hebel 7 der jeweilige Füllstand in den verschiedenen Tintenbehältern ablesen.

## Patentansprüche

1. Einrichtung zur Überwachung des Füllstandes eines Behälters für Schreibflüssigkeit (Tinte) bei Registriergeräten mit
— einem flexiblen Tintenbeutel (1),
— einem in eine Halterung (5) einschiebbaren Behälter (3) für den Tintenbeutel (1),
— einer ebenen, etwa rechteckigen, auf dem Tintenbeutel (1) aufliegenden beweglichen Druckplatte (6),
— Mitteln zur Ausübung eines auf die Druckplatte (6) wirkenden Drucks,
— einem von den Mitteln betätigbaren Grenzwertmelder für eine, den störungsfreien Betrieb nicht mehr erlaubende Restmenge im Tintenbeutel bezeichnende Lage der Druckplatte (6), **gekennzeichnet durch**
einen über der Druckplatte (6) angeordneten einarmigen Hebel (7) mit einem etwa mittig angebrachten, prismenförmigen Fortsatz (9), dessen Schneide (10) quer auf der Druckplatte (6) aufliegt und von solcher Breite ist, daß ein Abkippen der Druckplatte (6) um ihre Längsachse vermieden wird und mit in der Nähe seines gelagerten Endes (8) angebrachten Mitteln (11, 12, 13) zur Betätigung des Grenzwertmelders und mit einem freien Ende (14), welches sich mindestens bis in die die vordere Begrenzung des Behälters (4) enthaltende senkrechte Ebene erstreckt und an dessen Stellung der Füllstand im Tintenbeutel (1) erkennbar ist.

2. Einrichtung nach Anspruch 1, **dadurch gekennzeichnet,** daß ein oder mehrere Behälter (3) in einer Ausnehmung (16) in der Gehäusewand (17) eines Druck- oder Registriergerätes zugänglich angeordnet und die Tintenbeutel mit dem verfahrbaren Schreibkopf der Tintenschreibeinrichtung verbunden sind.

3. Einrichtung nach Anspruch 2, **gekennzeichnet durch** eine die Ausnehmung (16) verschließende Tür (18) aus durchsichtigem Werkstoff, auf welche eine den Füllstand im Tintenbeutel (1) kennzeichnende vertikale Gradeinteilung (19) angebracht ist.

4. Einrichtung nach Anspruch 1, **dadurch gekennzeichnet,** daß das freie Ende (14) des Hebels (7) als Fingerauflage (15) ausgebildet ist.

## Claims

1. Device for monitoring the level of a container for writing liquid (ink) for recording apparatuses having
— a flexible ink sack (1),
— a container (3), which can be inserted into a holder (5), for the ink sack (1),
— a level, approximately rectangular, moving pressure plate (6) resting on the ink sack (1),
— means for exercising a pressure acting on the pressure plate (6),
— a limiting value signaller, operable by the means, for a position of the pressure plate indicating a residual quantity in the ink sack no longer allowing disturbance-free operation, characterized by
a one-armed lever (7) arranged over the pressure plate (6) with a prism-shaped extension (9) applied approximately in the middle, the edge (10) of the extension resting perpendicularly on the pressure plate (6) and being of such a width that a tipping of the pressure plate (6) about its longitudinal axis is avoided and with means (11, 12, 13) applied in the vicinity of its mounted end (8) for the actuation of the limiting value signaller and with a free end (14) which extends at least into the perpendicular plane containing the front limitation of the container (4) and from the position of which the level in the ink sack (1) can be observed.

2. Device according to claim 1, characterized in that one or several containers (3) are arranged in an accessible manner in a recess (16) in the housing wall (17) of a printing or recording apparatus and the ink sacks are connected to the moveable writing head of the ink writing device.

3. Device according to claim 2, characterized by a door (18), closing the recess (16), of transparent material, on to which a vertical graduation (19) is applied which characterizes the level in the ink sack (1).

4. Device according to claim 1, characterized in that the free end (14) of the lever (7) is formed as finger rest (15).

## Revendications

1. Dispositif pour contrôler l'état de remplissage d'un récipient pour un liquide d'écriture (encre) dans des appareils d'enregistrement, comportant
— un sachet flexible à encre (1),
— un récipient (3) pouvant être inséré dans un support (5) et prévu pour le sachet à encre (1),
— une plaque plane mobile (6), approximativement rectangulaire, en appui sur le sachet à encre (1),
— des moyens pour appliquer une pression agissant sur la plaque de pression (6),
— un transmetteur de valeur limite, pouvant être actionné par ces moyens et servant à indiquer une position de la plaque de pression (6) signalant la présence, dans le sachet à encre, d'une quantité résiduelle ne permettant plus un fonctionnement non perturbé, caractérisé par

— un levier à un bras (7) disposé au-dessus de la plaque de pression (6) et possédant un prolongement prismatique (9), disposé approximativement en position centrée et dont l'arête (10) s'appuie transversalement sur la plaque de pression (6) et possède une largeur permettant d'éviter un basculement de la plaque de pression (6) autour de son axe longitudinal, et des moyens (11, 12, 13) disposés à proximité de l'extrémité supportée (8) du levier et servant à actionner le transmetteur de valeur limite, et une extrémité libre (14), qui s'étend au moins jusque dans le plan vertical, dans lequel se situe la limite avant du récipient (4), et dont la position permet d'identifier le niveau de remplissage dans le sachet à encre (1).

2. Dispositif suivant la revendication 1, caractérisé par le fait qu'un ou plusieurs récipients (3) sont disposés, de manière à être accessibles, dans un évidement (16) ménagé dans la paroi (17) du boîtier d'un appareil d'impression ou d'enregistrement, et que les sachets à encre sont reliés à la tête d'écriture mobile du dispositif d'écriture à encre.

3. Dispositif suivant la revendication 2, caractérisé par une porte (18) qui ferme l'évidement (16) et qui est réalisée en un matériau transparent, sur lequel est installée une graduation verticale en degrés (19), qui caractérise l'état de remplissage dans le sachet à encre (1).

4. Dispositif suivant la revendication 1, caractérisé par le fait que l'extrémité libre (14) du levier (7) est réalisée sous la forme d'un appui pour un doigt.

FIG 1

FIG 2